# EUROPEAN PATENT APPLICATION

(11) **EP 2 746 922 A2**
(43) Date of publication of application: **25.06.2014**
(21) Application number: 13190241.3
(22) Date of filing: 25.10.2013
(51) Int. Cl.: G06F 3/0488

(54) **Touch control method and handheld device utilizing the same**

(30) Priority: 20.12.2012 TW 101148599
(71) Applicant: Institute for Information Industry, Taipei (TW)
(72) Inventor: Yu, Han-Fei, 106 Taipei City (TW); Ho, Cheng-Yuan, 111 Tapei City (TW); Yu, Wei, 106 Taipei City (TW)
(74) Representative: Viering, Jentschura & Partner Patent- und Rechtsanwälte

(57) **Abstract**

A touch control method and handheld device utilizing the same are provided. The touch control method is disclosed, adopted by a handheld device comprising a primary touch control device and a secondary touch control device, comprising: displaying, by the primary touch control device, a screen; receiving, by the secondary touch control device, a first input; and based on the first input, determining and executing, by the controller, an operating program or an application program for generating the screen displayed on the primary touch control device; wherein the primary touch control device and the secondary touch control device are located on two different surfaces on the handheld device.

## Description

### BACKGROUND OF THE INVENTION

### Field of the Invention

The present invention relates to a dual-touch or a multi-touch control mechanism, and in particular, relates to a touch control method and a handheld device utilizing the same.

### Description of the Related Art

As smart phones and tablet computers have gained considerable popularity in the world, input approaches thereof have continuously advanced.

When operating smart phones with a single hand, one hand is used to hold the smart phone, and only the thumb of the hand may be used for clicking and manipulation, which is difficult. Thus, for complicated operations, such as enlarging or shrinking items on a display, two hands are required. As for controls of the tablet computer, keyboards require both hands to input, enlarge, shrink or move items on a display, which is inconvenient for users.

### BRIEF SUMMARY OF THE INVENTION

A detailed description is given in the following embodiments with reference to the accompanying drawings.

An embodiment of a touch control method is disclosed, adopted by a handheld device comprising a primary touch control device and a secondary touch control device, comprising: displaying, by the primary touch control device, a screen; receiving, by the secondary touch control device, a first input; and based on the first input, determining and executing, by the controller, an operating program or an application program for generating the screen displayed on the primary touch control device; wherein the primary touch control device and the secondary touch control device are located on two different surfaces on the handheld device.

Another embodiment of a handheld device is provided, comprising a primary touch control device, a secondary touch control device and a controller. The primary touch control device is configured to display a screen. The secondary touch control device is configured to receive a first input. The controller, coupled to the primary and secondary touch control devices, is configured to determine and execute an operating program or an application program based on the first input, for generating the screen displayed on the primary touch control device. The primary touch control device and the secondary touch control device are located on two different surfaces on the handheld device.

### BRIEF DESCRIPTION OF THE DRAWINGS

The present invention can be more fully understood by reading the subsequent detailed description and examples with references made to the accompanying drawings, wherein:

FIGs. 1A, 1B and 1C illustrate a front surface and rear surface for 3 types of handheld devices according to embodiments of the invention.

FIG. 2 is a block diagram of a handheld device 20 according to an embodiment of the invention.

FIG. 3 is a flowchart of a touch control method 3 according to an embodiment of the invention.

FIG. 4 is a flowchart of a touch control method 4 according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

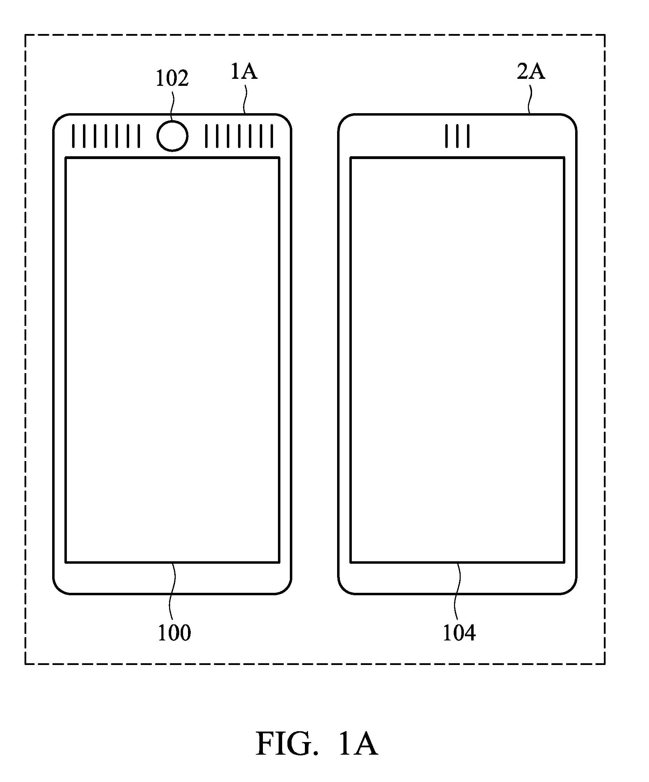

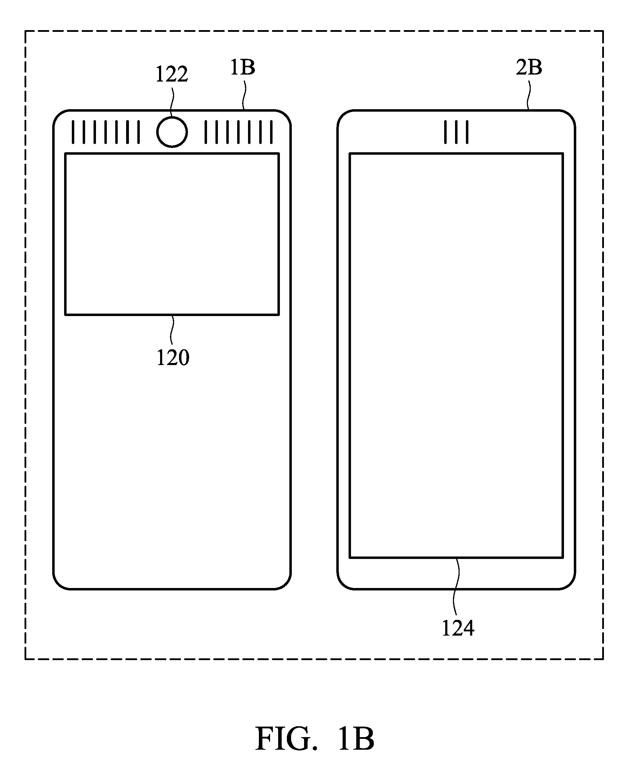

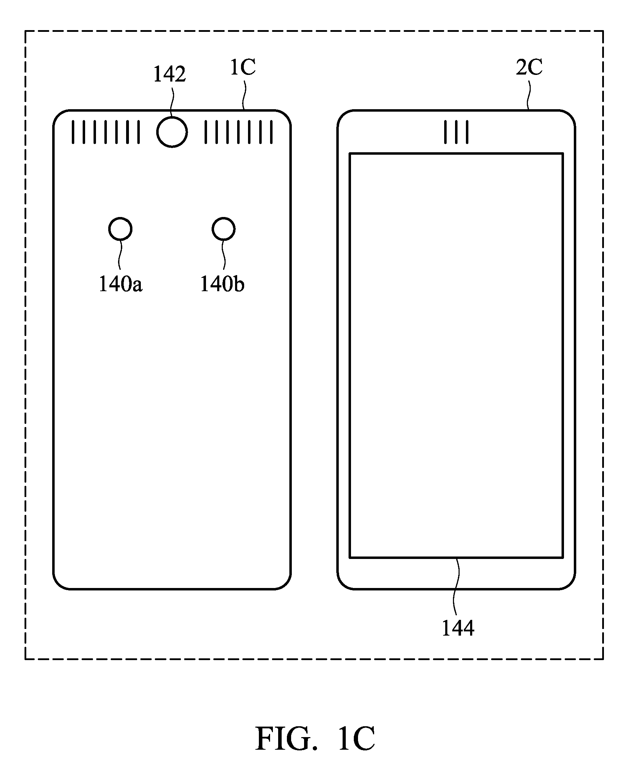

FIGs. 1A, 1B and 1C illustrate front surfaces and rear surfaces for 3 types of handheld devices according to embodiments of the invention. The 3 types of handheld devices in the embodiments are associated with hardware interfaces for dual-surface touch control devices which are equipped with a secondary touch control device on a rear surface. In FIG. 1A, the secondary touch control device on the rear surface 1A of the handheld device is a secondary touch control screen 100, and the primary touch control device on the front surface 2A of the handheld device is a primary touch control screen 104. In FIG. 1B, the secondary touch control device on the rear surface 1B of the handheld device is a touch pad 120, and the primary touch control device on the front surface 2B of the handheld device is a primary touch control screen 124. In FIG. 1C, the secondary touch control devices on the rear surface 1C of the handheld device are optical track pads 140a and 140b, and the primary touch control device on the front surface 2C of the handheld device is a primary touch control screen 144. The rear surfaces 1A, 1B and 1C may be equipped with camera lens 102, 122 and 142, respectively, for providing functions of taking photos or recording a video. The handheld device may be a handset, a tablet computer, a handheld game console or other handheld touch control devices. The secondary touch control device may be a transparent or an opaque device. Moreover, the secondary touch control device may be a touch control screen capable of displaying images, such as the touch control screen 100 of FIG. 1A, or may be a touch control device without displaying capability, such as the touch pad 120 of FIG. 1B and the optical track pads 140a and 140b.

When a user holds or grabs the handheld device to view the front screen, the fingers on the rear surface can move on the secondary touch control device for touch control operation. For example, when a user holds the handset with a single hand while looking at the front screen of the handset, spare fingers on the rear surface of the handset can perform various touch control operations. In other embodiments, a user can hold the tablet computer with two hands while looking at the front screen of the tablet computer, while the spare fingers on the rear surface of the tablet computer can perform touch control operations. In certain embodiments, rather than being disposed on the rear surface, the secondary touch control device can be disposed at the lateral surface of the handheld device. The secondary touch control device may be one or more touch control screens, touch pads, or optical track pads disposed at a surface different from the one that contains the main screen (primary touch control device), as depicted in FIG. 1B and 1C. The front surface of the handheld device is a touch control device, capable of displaying and providing the touch control capability.

In FIGs. 1B and 1C, the fingers of a single hand can control the touch pad 120 or the optical track pads 140a and 140b. In the embodiment of FIG. 1C, the optical track pads 140a and 140b may be disposed at locations on the rear surface 1C where the index finger and the middle finger can move comfortably for the touch control operations. In some embodiments, when reading from a handset, the left and right optical track pads 140a and 140b can be utilized for shifting on a screen. For example, moving the optical track pads 140a and 140b upwards or downwards concurrently may represent an "enlarging" or a "shrinking" operation. The handheld device may be configured in a mouse mode, which enables the optical track pads 140a and 140b to serve as a wireless optical mouse. In the embodiment of FIG. 1B, the touch pad 120 may be disposed at a location suitable for operation of the index finger and the middle finger of a user. Note that the mechanism for inputting commands is identical to that explained for the optical track pads 140a and 140b of FIG. 1C.

The handheld devices in the embodiments include secondary touch control devices at the rear surfaces, preventing from blocking views of the primary touch control devices while providing the touch control commands. Thereby, a user can operate the handheld device with a single hand, issuing the touch control commands without the need of moving the hand to the front touch panel. A more convenient and intuitive input mechanism is provided to offer an alternative method for input from the front touch control device.

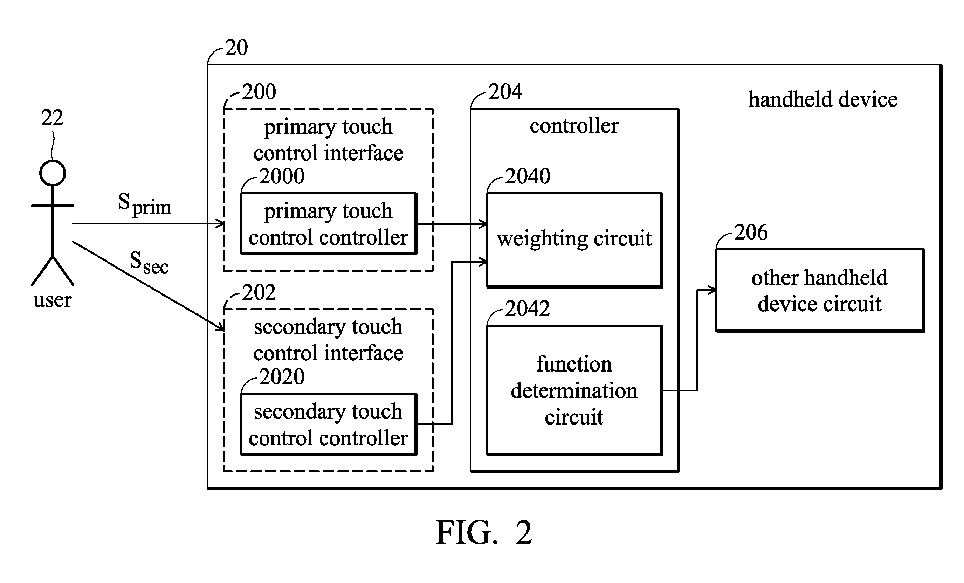

FIG. 2 is a block diagram of a handheld device 20 according to an embodiment of the invention, including a primary touch control device 200, a secondary touch control device 202, controller 204 and other handheld device circuit 206. The primary touch control device 200 includes a primary touch control controller 2000, and the secondary touch control device 202 includes a secondary touch control controller 2020. The primary touch control device 200 and the secondary touch control device 202 are coupled to the controller 204, and the controller 204 is further coupled to the other handheld device circuit 206.

The primary touch control device 200 is a primary touch control screen (primary touch control device), disposed on the front surface of the of the handheld device 20, configured to display screens, receive and pass a primary touch control input Sprim to the primary touch control controller 2000 for preliminary signal processing such as filtering out noises in the primary touch control input Sprim and determining an order for signal processing. The primary touch control controller 2000 then sends the processed primary touch control input Sprim to the controller 204. The secondary touch control device 202 (secondary touch control device) is disposed at the rear surface of the handheld device 20, configured to receive and pass a secondary touch control input Ssec to the secondary touch control controller 2020 for preliminary signal processing such as filtering out noises in the secondary touch control input Ssec and determining an order for the signal processing. The secondary touch control controller 2020 then sends the processed secondary touch control input Ssec to the controller 204.

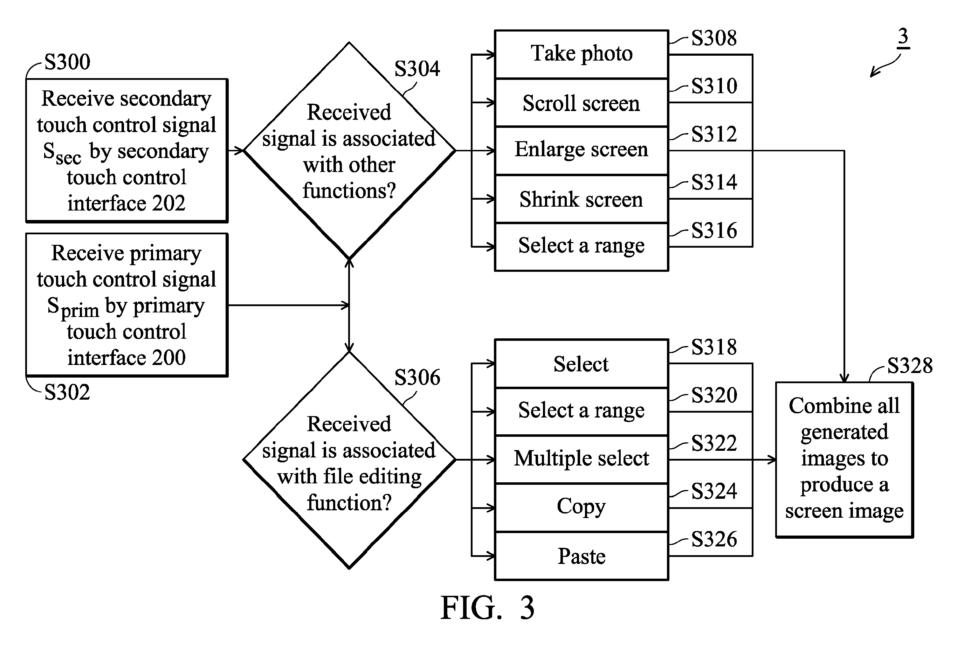

The weighting circuit 2040 is configured to receive the processed primary touch control input Sprim from the primary touch control controller 2000 and the processed secondary touch control input Ssec from the secondary touch control controller 2020, and subsequently, determines a priority of the processed primary touch control input Sprim and secondary touch control input Ssec. When a user operates the primary touch control device 200 and the secondary touch control device 202 concurrently, the weighting circuit 2040 employs the primary touch control input Sprim primarily, combined with the secondary touch control input Ssec, for determining a selected operation. The function determination circuit 2042 is coupled to the weighting circuit 2040, configured to interpret the touch control signals Sprim and Ssec into a command signal, and pass the command signal to the other handheld device circuit 206. The function determination circuit 2042 is configured to define a function corresponding to the touch control signals Sprim and Ssec and execute the defined function. The defined functions in the embodiments comprise input (editing) and selection (operation) commands. Taking the rear surface 1C of the handheld device of FIG. 1C as an example, when a user 22 presses a lateral button (not shown) of the handheld device 20, a pointer will appear on the primary touch control device 200, and move on the primary touch control device 200 according to the inputs from the optical track pads 140a and 140b. When a user 22 presses the optical track pads 140a or 140b, both the touch control function and the mouse function will be enabled on the handheld device 20. A touch control method 3 in FIG. 3 illustrates a defined command signal for the dual touch control devices as provided in the embodiments of the invention.

The embodiments describe a smart phone, on the top of the existing touch control commands for the front surface touch screen, further incorporating a secondary touch control device, utilizing the existing touch control commands and newly defined touch control commands on the secondary touch control device, in conjunction with a lateral physical button or a touch control button, providing increased touch control commands and a more convenient and intuitive input mechanism.

FIG. 3 is a flowchart of a touch control method 3 according to an embodiment of the invention, incorporating the handheld device 20 of FIG. 2.

Upon startup of the touch control method 3, the handheld device 20 may display one or more images on a screen. The handheld device 20 is configured to monitor and receive the secondary touch control signal Ssec input by the user 22 from the secondary touch control device 202 (S300), while monitoring and receiving the primary touch control signal Sprim input by the user 22 from the primary touch control device 200 (S302).

After receiving the primary touch control signal Sprim, the weighting circuit 2040 can filter out noise and determine a processing order, and the function determination circuit 2042 can then determine whether the primary touch control signal Sprim comprises the file editing operation (S306) or other select, scaling, scrolling or photo operations (S304). On the other hand, when receiving the secondary touch control signal Ssec, the weighting circuit 2040 can filter out noise and determine a processing order, and the function determination circuit 2042 can then determine whether the secondary touch control signal Ssec comprises other functions such as select, scaling, scrolling or photo operations (S304). In some embodiments, the function determination circuit 2042 can determine that the current mode belongs to an edit mode or another operation mode. In other embodiments, the function determination circuit 2042 can determine the selected operation according to the content of the primary touch control signal Sprim.

For example, when the primary touch control signal Sprim contains a command corresponding to "select an item" or "selecting a range", the function determination circuit 2042 can determine that the selected operation is in the edit mode, and select an image, a text or an object corresponding to the primary touch control signal Sprim (S316). Selecting a single item represents a selected operation. When a second finger selects the second and the third items while the first finger selects the first item without releasing it, the function determination circuit 2042 can determine that the selected operation is a multiple selection operation in the edit mode (S322). When the primary touch control signal Sprim contains information of two fingers defining a selected range with a start point and an end point, the function determination circuit 2042 can determine that the selected operation comprises selecting a range in the edit mode, and then select the image, the text or the object in the selected range (S320). So long as the second finger remains on the touch screen, the selected range can be altered by sliding the fingers and redefining the selected range on the touch screen. When the primary touch control signal Sprim contains information of three fingers gripping inwards and leaving the screen surface, the function determination circuit 2042 can determine that the selected operation comprises a copy operation in the edit mode, and then copy the image, the text or the object in the selected range (S324). When the primary touch control signal Sprim contains information of three fingers landing on the screen surface and expanding outwards, the function determination circuit 2042 can determine that the selected operation is a paste operation in the edit mode, and then paste the copied the image, the text or the object on the primary touch control device 200 (S326).

The other select, scaling, scrolling and photo operations can be selected by the primary touch control signal Sprim or the secondary touch control signal Ssec. When the function determination circuit 2042 determines that the touch control signal from the primary touch control device 200 or the secondary touch control device 202 contains information of a finger moving up, down, left or right, the screen will be scrolled according to the touch control signal (S310). In terms of the rear surface touch control, the secondary touch control signal Ssec may include a signal indicating a finger moving up, down, left or right on the secondary touch control device 202. When the function determination circuit 2042 determines that the touch control signal from the primary touch control device 200 or the secondary touch control device 202 contains information of two fingers moving upwards together, or the two fingers moving in opposite and expanding directions, the screen will be enlarged (S312). In terms of the rear surface touch control, the secondary touch control signal Ssec may include a signal indicating that the index finger and the middle finger are moving upwards together, or the two fingers are moving in opposite and expanding directions on the secondary touch control device 202 of the handheld device 20. When the function determination circuit 2042 determines that the touch control signal from the primary touch control device 200 or the secondary touch control device 202 contains information of two fingers moving downwards together, or the two fingers moving in opposite directions and in a shrinking manner, the screen will be shrunk (S314). In terms of the rear surface touch control, the secondary touch control signal Ssec may include a signal indicating that the index finger and the middle finger are moving downwards together, or the two fingers moving in opposite directions and in a shrinking manner on the secondary touch control device 202 of the handheld device 20.

As for the photo operation (S308), in the photo mode, a finger can slide across the touch control devices of a front surface or the rear surface to take a photo. For example, on the primary touch control device 200 or the second touch control device 202, with a tick in the horizontal or the vertical direction, the function determination circuit 2042 can determine to take the photo. In some embodiments, the user 22 can tick upwards on the secondary touch control device 202 on the rear surface, while ticking on the primary touch control device 200 on the front surface to trigger the photo shooting operation. In some embodiments, a shutter image is shown on the primary touch screen, representing a two staged shutter release. When pressed on the shutter image for the first time the autofocus and the light meter are activated. When pressed on the shutter image for the second time the photo is taken. In some embodiments, the shutter image only shows when a user 22 touches the screen. In other embodiments, a hint arrow is utilized. When a user presses on the primary touch control device 200 on the front surface, the function determination circuit 2042 can determine to activate the autofocus and the light meter, while displaying the hint arrow on the primary touch control device 200. When a user slides the finger along the hint arrow, the function determination circuit 2042 can continue taking the photo. When the shutter image is displayed on the primary touch control device 200, a "tick" operation is more stable than a "press" operation. When two fingers slide on the primary touch control device 200 or the secondary touch control device 202, the function determination circuit 2042 can scale the size for the photo accordingly. When both the primary touch control device 200 and the secondary touch control device 202 are implemented by touch screens, the user 22 can preview the photo on one of the touch screens before taking the photo.

The function determination circuit 2042 determines and performs one or more applications corresponding to Steps S308 through S326 according to the primary touch control signal Sprim and/or secondary touch control signal Ssec. The corresponding screens generated by each application can be combined to produce a resultant screen which is output to the primary touch control device 200. For example, the user 22 selects an item by the primary touch control device 200 on the front surface, and enlarges the selected item by the secondary touch control device 202 on the rear surface. The function determination circuit 2042 can combine the screen generated by the item selection and the screen enlargement to produce a resultant screen displayed on the primary touch control device 200.

The embodiments in FIG. 3 describe a touch control method for a handheld device, on the top of the existing touch control commands for the front surface touch screen, further incorporating a secondary touch control device, utilizing the existing touch control commands and newly defined touch control commands on the secondary touch control device, in conjunction with a lateral physical button or a touch control button, providing increased touch control commands and a more convenient and intuitive input mechanism.

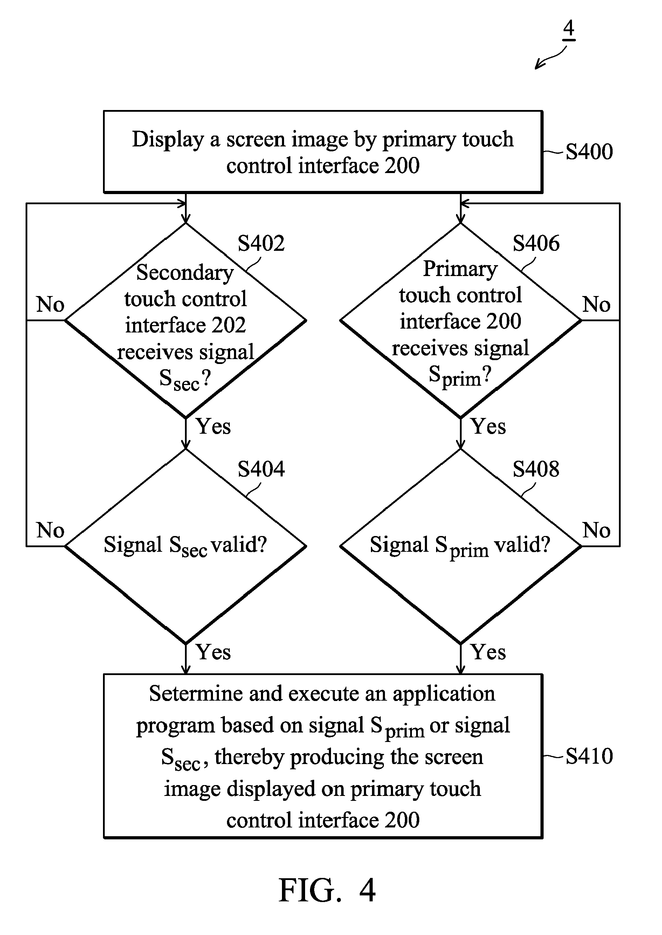

FIG. 4 is a flowchart of a touch control method 4 according to another embodiment of the invention, incorporating the handheld device 20 of FIG. 2.

Upon startup of the touch control method 4, the handheld device 20 may display one or more images on a screen (S400). Next, the secondary touch control device 202 continuously detects whether the user 22 has input a secondary touch control signal Ssec (S402). Upon receiving the secondary touch control signal Ssec, the secondary touch control controller 2020 can filter out noises from the secondary touch control signal Ssec and determine whether the secondary touch control signal Ssec is valid (S404). When the secondary touch control device 202 does not detect a secondary touch control signal Ssec, the touch control method 4 goes back to Step S402, to continue monitoring for a secondary touch control signal Ssec. The secondary touch control controller 2020 can compare the secondary touch control signal Ssec with all defined commands. When the secondary touch control signal Ssec matches to a defined command, then the secondary touch control signal Ssec is regarded as a valid signal. When the secondary touch control signal Ssec does not match with a defined command, then the secondary touch control signal Ssec is regarded as an invalid signal. A defined command may be one of the operations in Step S308 through S316 in the touch control method 3.

Similarly, the primary touch control device 200 continuously detects whether a user 22 inputs a primary touch control signal Sprim (S406). Upon receiving the primary touch control signal Sprim, the primary touch control controller 2000 can filter out noises from the primary touch control signal Sprim and determine whether the primary touch control signal Sprim is valid (S408). When the primary touch control device 200 does not detect a primary touch control signal Sprim, the touch control method 4 goes back to Step S406, to continue monitoring for a primary touch control signal Sprim. The primary touch control controller 2000 can compare the primary touch control signal Sprim with all defined commands. When the primary touch control signal Sprim matches to a defined command, then the primary touch control signal Sprim is regarded as a valid signal. When the primary touch control signal Sprim does not match with a defined command, then the primary touch control signal Sprim is regarded as an invalid signal. A defined command may be one of the operations in Step S308 through S316 in the touch control method 3. When the primary touch control signal Sprim is invalid, the touch control method 4 then returns to Step S406, to continue monitoring for the primary touch control signal Sprim.

When detecting a valid primary touch control signal Sprim or a valid secondary touch control signal Ssec, the function determination circuit 2042 can determine and perform an application program based on the primary touch control signal Sprim or secondary touch control signal Ssec, thereby generating the screen to be displayed on the primary touch control device 200 (S410). The application program includes a startup program, a login program, an operation program, a logout program or a shutdown program. The operation program includes a startup object, a shut down object, an addition object, a deletion object, a cut object, a paste object, a copy object, a scale object, a shift object, a check object, a edit object, a modification object, a print object, a view object, an insertion object, a search object, a replacement object, an adjustment object, a transfer object, a review object and a translation object.

The embodiments in FIG. 4 describe a touch control method for a handheld device, on the top of the existing touch control commands for the front surface touch screen, further incorporating a secondary touch control device, utilizing the existing touch control commands and newly defined touch control commands on the secondary touch control device, in conjunction with a lateral physical button or a touch control button, providing increased touch control commands and a more convenient and intuitive input mechanism.

As used herein, the term "determining" encompasses calculating, computing, processing, deriving, investigating, looking up (e.g., looking up in a table, a database or another data structure), ascertaining and the like. Also, "determining" may include resolving, selecting, choosing, establishing and the like.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device, discrete gate or transistor logic, discrete hardware components or any combination thereof designed to perform the functions described herein. A general purpose processor may be a microprocessor, but in the alternative, the processor may be any commercially available processor, processor, microprocessor or state machine.

The operations and functions of the various logical blocks, modules, and circuits described herein may be implemented in circuit hardware or embedded software codes that can be accessed and executed by a processor.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A touch control method, adopted by a handheld device comprising a primary touch control device and a secondary touch control device, comprising:
displaying, by the primary touch control device, a screen;
receiving, by the secondary touch control device, a first input; and
based on the first input, determining and executing, by the controller, an operating program or an application program for generating the screen displayed on the primary touch control device;
wherein the primary touch control device and the secondary touch control device are located on two different surfaces on the handheld device.

2. The touch control method of claim 1, wherein the secondary touch control device is an opaque device.

3. The touch control method of claim 1, wherein the secondary touch control device is one of a touch screen, a touch pad and an optical track pad.

4. The touch control method of claim 1, further comprising:
receiving, by the primary touch control device, a second input; and
based on the second input, determining and executing, by the controller, whether the operating program or the application program for generating the screen displayed on the primary touch control device.

5. The touch control method of claim 4, wherein the application program determined based on the second input comprises file editing.

6. The touch control method of claim 1, further comprising:
determining, by the controller, whether the first input is invalid; and
when the first input is invalid, filtering out, by the controller, the first input.

7. The touch control method of claim 1, wherein primary touch device also receives the first input.

8. The touch control method of claim 1, wherein the application program determined based
- on the first input comprises taking pictures; or
- on the first input comprises scrolling pages on the screen; or
- on the first input comprises scaling the screen; or
- on the first input comprises selecting an object on the screen.

9. A handheld device, comprising:
a primary touch control device, configured to display a screen;
a secondary touch control device, configured to receive a first input; and
a controller, coupled to the primary and secondary touch control devices, configured to determine and execute an operating program or an application program based on the first input, for generating the screen displayed on the primary touch control device;
wherein the primary touch control device and the secondary touch control device are located on two different surfaces on the handheld device.

10. The handheld device of claim 9, wherein the secondary touch control device is an opaque device.

11. The handheld device of claim 9, wherein the secondary touch control device is one of a touch screen, a touch pad and an optical track pad.

12. The handheld device of claim 9, wherein:
the primary touch control device is configured to receive a second input; and
the controller is configured to determine and execute an operating program or an application program based on the second input, for generating the screen displayed on the primary touch control device.

13. The handheld device of claim 12, wherein the application program determined based on the second input comprises file editing.

14. The handheld device of claim 9, wherein the controller is configured to determine whether the first input is invalid, and when the first input is invalid, the first input is filtered out.

15. The handheld device of claim 9, wherein the application program determined based
- on the first input comprises taking pictures; or
- on the first input comprises scrolling pages on the screen; or
- on the first input comprises scaling the screen; or
- on the first input comprises selecting an object on the screen.
